# EUROPÄISCHE PATENTSCHRIFT

(11) **EP 1 556 240 B1**
(45) Veröffentlichungstag und Bekanntmachung des Hinweises auf die Patenterteilung: **30.05.2007**
(21) Anmeldenummer: 03773492.8
(22) Anmeldetag: 04.10.2003
(51) Int. Cl.: B60J 10/00

(54) **VERFAHREN ZUR HERSTELLUNG EINES DICHTUNGSSTRANGS FÜR KAROSSERIEDICHTUNGEN MIT BEREICHSWEISE VERSTÄRKTEM DICHTUNGSPROFIL**
METHOD FOR PRODUCING A SEALING BILLET FOR BODYWORK SEALS WITH A PARTIALLY REINFORCED SEALING PROFILE SECTION
PROCÉDÉ DE FABRICATION D'UN BOURRELET D'ETANCHEITE POUR GARNITURES D'ETANCHEITE DE CARROSSERIE, PRESENTANT UN PROFIL D'ETANCHEITE PARTIELLEMENT RENFORCE

(30) Priorität: 31.10.2002 DE 20216759 U
(43) Veröffentlichungstag der Anmeldung: 27.07.2005
(73) Patentinhaber: SaarGummi technologies S.à.r.l., 5445 Schengen (LU)
(72) Erfinder: DILLMANN, Martin, 66809 Nalbach (DE)
(74) Vertreter: Bernhardt, Winfrid
(86) Internationale Anmeldenummer: PCT/DE2003/003293
(87) Internationale Veröffentlichungsnummer: WO 2004/039619

(56) Entgegenhaltungen:
- EP-A- 0 586 073
- DE-A- 10 005 642
- GB-A- 2 161 525
- US-A- 4 374 880
- US-A- 4 448 430
- US-A- 4 708 898

## Beschreibung

Die Erfindung betrifft ein Verfahren zur Herstellung eines Dichtungsstrangs zum Abdichten zwischen einem beweglichen Fahrzeugteil und der Karosserie eines Automobils, dessen Dichtungsprofil als Hohlkammerprofil ausgebildet wird, wobei der Dichtungsstrang in mindestens einem zu starker Krümmung vorgesehenen Bereich ein in die Hohlkammer hinein verstärktes Dichtungsprofil aufweist und die in Längsrichtung des Dichtungsstrangs verlaufende Verstärkung ein Einfallen des Dichtbereichs des Dichtungsprofils verhindert oder begrenzt.

Solche Dichtungsstränge finden im Karosseriebereich zwischen beweglichen Fahrzeugteilen und der Karosserie, insbesondere zwischen Tür und Karosserieseitenwand zwischen Karosserie und Heckklappe oder Karosserie und Frontklappe Verwendung. Sie dichten hier einen Innenraum, beispielsweise den Fahrgastinnenraum insbesondere gegen den Zutritt von Feuchtigkeit und Lärm ab. Die Dichtfunktion muß auch noch nach häufiger Betätigung des beweglichen Fahrzeugteiles verlässlich erfüllt werden.

Das Dichtungsprofil eines solchen Dichtungsstranges unterteilt man in den Befestigungsbereich und in den Dichtbereich. Mittels des Befestigungsbereiches wird der Dichtungsstrang beispielsweise an dem Fahrzeugteil angebracht. Dies kann durch Aufstecken auf einen am Fahrzeugteil angebrachten Flansch oder durch Aufkleben erfolgen. Dementsprechend ist der Befestigungsbereich des Dichtungsstranges zu gestalten.
Der Dichtbereich erfüllt die eigentliche Dichtfunktion. Es wird oftmals von einem schlauchförmigen Hohlkammerprofil gebildet. Dabei kann der Bereich der Hohlkammerwand, der am nächsten zur Befestigungsfläche liegt, auch von dem Befestigungsbereich gebildet werden, so dass hier Dichtbereich und Befestigungsbereich ineinander übergehen.
Für den Befestigungsbereich wird meist ein härteres, gummiartiges Material verwendet als für den Dichtbereich, der oftmals aus Weich- oder Moosgummi gebildet wird. Das Weichgummi ist besser formbar und passt sich besser der Geometrie des Hohlraumes des abzudichtenden Spaltes an als ein härteres gummiartiges Material. Dieser Werkstoff trägt somit zu einer guten Dichtwirkung bei.

Die Anforderungen an den Dichtbereich können wie folgt beschrieben werden:
- Erfüllen der Dichtfunktion zwischen Karosserie und beweglichem Fahrzeugteil auch nach oftmaligem Betätigen des Fahrzeugteiles,
- geringe Schließkräfte zwischen Karosserie und beweglichem Fahrzeugteil,
- geringes Gewicht,
- geringe Herstellkosten.

Die Dichtfunktion wird erfüllt, wenn der Dichtungsstrang den Spalt zwischen Karosserie und beweglichem Fahrzeugteil im geschlossenen Zustand sicher an jeder Stelle des Umfangs des Fahrzeugteiles füllt, so dass beispielsweise keine Feuchtigkeit in den Fahrgastinnenraum eindringen kann.
Der Dichtungsstrang muß eine geringe Schließkraft zwischen Karosserie und beweglichem Fahrzeugteil ermöglichen. Beim Schließen muß das bewegliche Fahrzeugteil unter möglichst geringer Kraftanstrengung in eine Verriegelung an der Karosserie einrasten, aber im geschlossenen Zustand zwischen den beiden Teilen so eng anliegen, dass die oben genannte Dichtfunktion erfüllt wird.
Um bei der Herstellung Material und beim Betrieb des Automobils Kraftstoff sparen zu können, sollte das Gewicht des Dichtungsstranges möglichst gering gehalten werden. Insbesondere unter der Maßgabe, dass es sich bei einem solchen Dichtungsstrang um eine Massenware handelt, sollten die Herstellkosten so niedrig wie möglich gehalten werden.

Ein Dichtungsstrang für Karosseriedichtungen wird in der Regel aus gummiartigem Material extrudiert und dann in der Regel beim Dichtungshersteller auf die Länge abgeschnitten, die beispielsweise gerade dem Umfang des beweglichen Fahrzeugteiles entspricht. Beim Automobilhersteller wird die Dichtung auf einen Aufsteckflansch, beispielsweise des beweglichen Fahrzeugteiles, aufgebracht oder auf eine Befestigungsfläche geklebt. Hierbei verlaufen der Aufsteckflansch oder die Befestigungsfläche nicht immer geradlinig, vielmehr ist der Dichtungsstrang auch auf Bereiche mit starker Krümmung, beispielsweise im oberen Fensterausschnitt einer Tür, anzubringen. Ohne Gegenmaßnahmen wird jedoch in solch engen Krümmungsbereichen das Hohlkammerprofil ab Unterschreiten eines bestimmten Grenzradius einfallen. Dies ist dadurch zu erklären, dass der Weg des Dichtungsstranges im Krümmungsinneren nahe der Befestigungsfläche kürzer ist als in dem gegenüberliegenden Bereich des Hohlkammerprofils, also im Krümmungsäußeren. Im Querschnitt des Dichtungsstranges entstehen dadurch Spannungen, die die im Krümmungsäußeren gelegene Wand des Hohlkammerprofils zur Mitte des Dichtungsprofils hin einfallen lassen. Tritt dieser Umstand auf, so wird der Dichtungsstrang in diesen Bereichen starker Krümmung seine Dichtfunktion nicht mehr zuverlässig erfüllen können, da der Spalt zwischen Karosserie und beweglichem Fahrzeugteil nicht mehr vollständig gefüllt wird. Auch wird die Schließkraft erhöht werden und eventuell das bewegliche Fahrzeugteil nicht mehr in die Verriegelung einrasten. Das Einfallen der Hohlkammerprofilwand wird dadurch verstärkt, dass wie oben beschrieben die Wand meist aus Weichgummi besteht, was zwar die Dichtfunktion begünstigt, sich aber negativ auf die Formstabilität des Hohlkammerprofils auswirkt.

Bekannte Maßnahmen zum Verhindern des Einfallens des Dichtbereichs sind:
- Verstärken oder Unterstützen der Wand des Hohlkammerprofils. Dies kann durch Einschieben eines Stabilisierungselementes, beispielsweise eines zweiten Schlauches, oder durch Einfüllen einer stabilisierenden Masse, beispielsweise eines Polyurethan- Schaumes in die Hohlkammer erfolgen. Dies bedeutet jedoch einen zusätzlichen Arbeitsvorgang und zusätzlichen Materialverbrauch bei der Herstellung des Dichtungsstranges, was die Herstellkosten und die Herstelldauer erhöht. Desweiteren erhöhen solche Maßnahmen die Schließkräfte, die aufzubringen sind, um das bewegliche Fahrzeugteil mit der Karosserie zu verriegeln. Auch bewirken sie eine starke Zunahme des Gewichtes des Dichtungsstranges.
- Biegen des Dichtungsstranges in die gewünschte Form. Hierbei wird der Bereich des Dichtungsstranges, der in einer starken Krümmung anzubringen ist, in einer Form unter Erhitzung an den Verlauf des Krümmungsbereiches des Fahrzeugteils angepaßt. Das Erhitzen führt dazu, daß der Dichtungsstrang auch nach dem späteren Abkühlen die gebogene Form in den gewünschten Bereichen beibehält. Dieser zweite Arbeitsvorgang führt ebenfalls zu einer Erhöhung der Herstellkosten, verstärkt durch die damit verbundenen Energiekosten. Desweiteren führt eine solche bleibende Biegung zu einer zumindest zweidimensionalen Ausbildung des Dichtungsstranges, was den Transport vom Dichtungshersteller zum Einbauort des Dichtungsstranges beim Automobilhersteller erschwert, indem der Dichtungsstrang mehr Platz in Anspruch nimmt, als wenn der Dichtungsstrang ungebogen transportiert wird.

Die DE 100 05 642 A1 beschreibt eine Randspaltabdichtung zum Abdichten eines Deckels gegenüber einem Fahrzeugdach. Hierbei wird die Wulstbildung der Dichtungsleiste, die insbesondere bei Kippstellung des Deckels entsteht, durch eine Materialaufdickung (Bezugszeichen 18), die in die Hohlkammer ragt, vermieden, insbesondere auch in der Zusammenarbeit mit Sollknickstellen. Die Materialaufdickung ist bereichsweise im Querschnitt, vorzugsweise im oberen Drittel, angeordnet und verläuft über die gesamte Länge der Dichtungsleiste.

Die EP 0 586 073 A1 beschreibt ein Hohlkammerprofil aufweisende Extrusionsstränge, mit in die Hohlkammer hineinragenden Verstärkungen in Krümmungsbereichen. Die Verstärkungen werden durch Änderungen des Querschnitts eines Extrusionsspalts erzeugt, wobei das Hohlkammerprofil entweder aus zwei gleichzeitig extrudierten Strängen zusammengesetzt oder durch nachträgliche Umformung eines einzigen extrudierten Strangs hergestellt wird.

Eine Dichtung mit den eingangs erwähnten Merkmalen geht aus der US 4,448,430 hervor. Als in die Hohlkammer hineinragende Verstärkung dient ein an einem Längsrand frei endender Steg, der durch eine kleine Öffnung in der Wand des Dichtungsprofils hindurch in das Dichtungsprofil eingesetzt und mit dem Dichtungsprofil verklebt ist.

Ausgehend hiervon liegt der Erfindung die Aufgabe zugrunde, ein Verfahren zur Herstellung eines Dichtungsstrangs der eingangs erwähnten Art derart weiterzubilden, dass es bei mindestens gleicher Formstabilität des Dichtungsstrangs in Krümmungsbereichen einen geringeren Aufwand erfordert.

Das diese Aufgabe lösende Verfahren nach der Erfindung ist dadurch gekennzeichnet, dass die Verstärkung bei laufender Extrusion unter Veränderung des Spaltquerschnitts des das Hohlkammerprofil komplett bildenden Extrusionsspalts einstückig angeformt wird.

Erfindungsgemäß erfolgt die Herstellung des kompletten Dichtungsstranges also durch variable Extrusion, bei der der Extrusionsspalt des Extruders bei laufender Extrusion weggesteuert in Abhängigkeit von der Länge der jeweiligen Bereiche variiert, wobei sich die gebildete Verstärkung in die komplett extrudierte HohlKammer hinein erstreckt. Dadurch, dass das Dichtungsprofil in klar definierten Bereichen, in denen die Gefahr besteht, dass das Hohlkammerprofil einfällt, verstärkt wird, wird Dichtungsmaterial eingespart, wodurch sich die Herstellungskosten und das Gewicht des Dichtungsstranges verringern. Desweiteren wird dadurch die Schließkraft gering gehalten.

Die vorteilhaften Ausbildungen der verstärkten Dichtungsprofile sind so gestaltet, dass sie in einem Arbeitsschritt extrudiert werden können. Ein zweiter Arbeitsvorgang, wie zum Beispiel das Einführen eines zweiten Schlauches oder das Biegen entfällt. Niedrige Herstellungskosten sind die Folge. Dabei wurde die Lage der Verstärkungen so gewählt, dass diese in die Hohlkammer ragen und somit sich die Bereiche des Dichtungsstranges mit verstärktem Dichtungsprofil nach außen hin nicht von den anderen Bereichen unterscheiden.

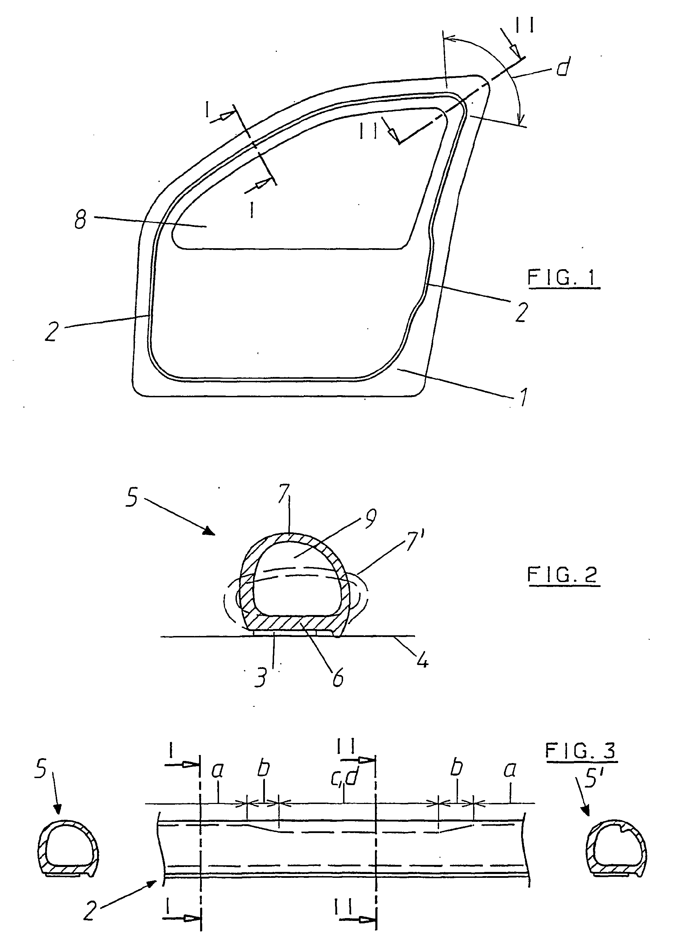

Die Erfindung ist anhand des Ausführungsbeispieles eines Dichtungsstranges, der auf ein bewegliches Fahrzeugteil, in diesem Beispiel eine Automobiltür, aufgebracht wurde, in diesem Beispiel geklebt wurde, in den Figuren 1 - 9 dargestellt und wird im folgenden unter Bezugnahme auf die Figuren beschrieben. Es zeigen:
- Fig. 1: die Draufsicht auf eine Automobiltür vom Fahrgastinnenraum aus gesehen,
- Fig. 2: unverstärktes Dichtungsprofil im Normalzustand und im eingefallenen Zustand (gestrichelt dargestellt),
- Fig. 3: ein unverstärktes Dichtungsprofil im Bereich der Linie I-I, einen masstabslosen Längsschnitt durch einen Dichtungsstrang mit einer durchgehenden Verstärkung im gesamten Bereich der starken Krümmung und ein verstärktes Dichtungsprofil im Bereich der Linie II-II,
- Fig. 4: einen maßstabslosen Längsschnitt durch einen Dichtungsstrang mit einer im Bereich der starken Krümmung unterbrochenen Verstärkung,
- Fig. 5-9: vorteilhafte Ausbildungen verstärkter Dichtungsprofile.

Figur 1 zeigt die Draufsicht auf eine Automobiltür 1 vom Fahrgastinnenraum aus gesehen. Wie im Zusammenhang mit Figur 2 zu sehen ist, wurde der Dichtungsstrang 2 mittels eines Klebstoffsystems 3- dies kann beispielsweise ein auf die Automobiltür oder auf den Dichtungsstrang aufgetragener Kleber oder ein Klebeband sein- auf eine Befestigungsfläche 4 der Automobiltür aufgebracht. Das in Figur 2 dargestellte unverstärkte Dichtungsprofil 5 teilt sich auf in einen Befestigungsbereich 6 und einen Dichtbereich 7. Der Dichtbereich ist als Hohlkammerprofil ausgebildet. Dichtbereich und Befestigungsbereich sind in diesem Beispiel aus dem gleichen Material hergestellt; üblich ist es aber, den Dichtbereich in einem weicheren Material, beispielsweise Moosgummi, auszuführen als den Befestigungsbereich.
Die Länge des Dichtungsstranges wurde so bemessen, dass dieser im eingebauten Zustand an der Automobiltür zu einem Ring geschlossen ist. Der Dichtungsstrang folgt an mehreren Stellen den Krümmungen der Automobiltür. Die Radien der Krümmungen sind unterschiedlich. Im Bereich der starken Krümmung d an der oberen Ecke des Fensterausschnittes 8 hat der Dichtungsstrang einem derart geringen Krümmungsradius zu folgen, dass die der Befestigungsfläche 6 gegenüberliegende Wand des Dichtbereiches 7 ohne Gegenmaßnahme zur Mitte des Dichtungsprofils hin in die Hohlkammer 9 einfallen würde. Die Lage der eingefallenen Wand des unverstärkten Dichtbereiches 7' ist in Figur 2 gestrichelt dargestellt. Im Extremfall wird die Verformung stattfinden bis die der Befestigungsfläche gegenüberliegende Wand des Hohlkammerprofils an die Befestigungsfläche stößt. In diesem Zustand füllt das Dichtungsprofil den Hohlraum zwischen Automobiltür und Karosserie nicht vollständig aus. Die Dichtfunktion kann in diesem Krümmungsbereich nicht zufriedenstellend wahrgenommen werden.

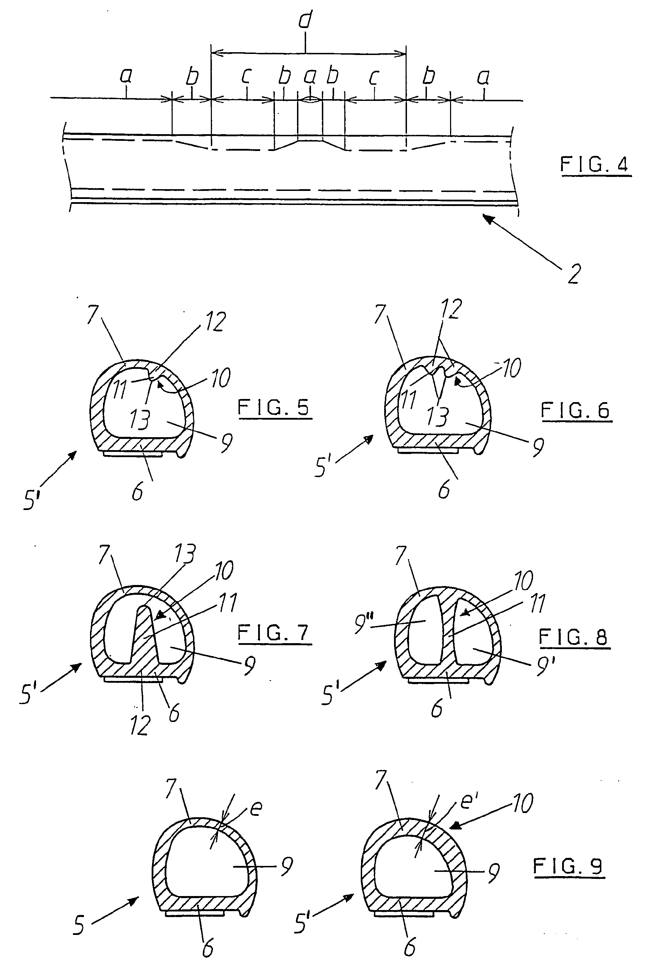

Die Figur 3 zeigt im linken Teil ein unverstärktes Dichtungsprofil 5 entsprechend Figur 2 im Bereich der Linie I-I, im mittleren Teil einen Längsschnitt durch einen Dichtungsstrang 2, der maßstabslos durch die Linien I-I und II-II verläuft sowie ein verstärktes Dichtungsprofil 5' wie es im Bereich der Linie II-II ausgebildet ist. Der Längsschnitt ist in drei Abschnitte gegliedert:
- im Abschnitt a ist das Dichtungsprofil unverstärkt ausgebildet,
- im Abschnitt c ist das Dichtungsprofil verstärkt ausgebildet,
- der Abschnitt b ist ein Übergangsbereich zwischen den Abschnitten a und b. In diesem Abschnitt wird bei der Herstellung des Dichtungsstranges bei laufender Extrusion der Spalt des Extrusionswerkzeuges beispielsweise vom Querschnitt eines unverstärkten Dichtungsprofiles 5 auf den Querschnitt eines verstärkten Dichtungsprofile 5' umgestellt.

Die Verstärkung des Dichtungsprofils kann im Bereich der starken Krümmung d durchgehend wie in Figur 3 dargestellt oder entsprechend Figur 4 unterbrochen ausgebildet sein. Die unterbrochene Ausbildung erhöht die Flexibilität des Dichtungsstranges und führt zu einem geringeren Materialverbrauch. In der Figur 4 setzt sich somit der Bereich einer starken Krümmung d aus mehreren Abschnitten mit unverstärktem Dichtungsprofil a und mehreren Abschnitten mit verstärktem Dichtungsprofil c sowie mehreren Übergängen b zusammen. Die Länge der Abschnitte a ist innerhalb des Bereiches der starken Krümmung d so zu wählen, daß das Dichtungsprofil nicht einfällt.

Im rechten Teil der Figur 3 ist ein verstärktes Dichtungsprofil 5' dargestellt. Dieses zeigt auch vergrößert Figur 5. Weitere vorteilhafte Ausbildungen verstärkter Dichtungsprofile 5' sind in den Figuren 6 - 9 in vergrößerter Darstellung aufgeführt. Die Verstärkungen 10 sind dabei so ausgebildet, daß von außen kein Unterschied zwischen Abschnitten a mit unverstärktem und Abschnitten c mit verstärktem Dichtungsprofil zu sehen ist.
In den Figuren 5 - 8 sind hierbei die Verstärkungen 10 als Stege 11 ausgebildet. In den Figuren 5 und 6 sind die Stege kurz und keilförmig ausgebildet. Die Stegwurzeln 12 liegen in der dem Befestigungsbereich 6 gegenüberliegenden Wand des Dichtbereichs 7. Die Stegspitzen 13 ragen in die Hohlkammer und zeigen in Richtung Befestigungsbereich. Die Verstärkung 10 kann aus einem, wie in Figur 5 dargestellt, oder aus mehreren Stegen 11, wie in Figur 6 gebildet werden.
Figur 7 zeigt die Verstärkung 10 als ebenfalls keilförmigen Steg 11; dieser ist jedoch in seinen Ausmaßen größer ausgebildet als die Stege in den Figuren 5 und 6 und überragt die Mitte des Dichtungsprofils. Das einfallende Hohlkammerprofil soll sich auf der Spitze des Steges ablegen und anschließend nicht mehr weiter verformen. Das Einfallen des Dichtbereiches wird dadurch nicht verhindert sondern vielmehr begrenzt. Die Stegwurzel 12 liegt im Befestigungsbereich 6; die Stegspitze 13 zeigt zu der dem Befestigungsbereich 6 gegenüberliegenden Wand des Hohlkammerprofils. In weiterer Ausbildung ist es möglich, mehrere solcher Stege im Hohlkammerprofil anzuordnen.

In Figur 8 ist die Verstärkung 10 des Dichtungsprofils 5' als Steg 11 ausgebildet, der die Hohlkammer in zwei Teilhohlkammern 9' und 9" unterteilt. Im Gegensatz zu den bisher beschriebenen Stegen verläuft dieser durchgehend zwischen Befestigungsbereich 6 und der diesem gegenüberliegenden Wand des Dichtbereichs. Auch hier können in einem Hohlkammerprofil mehrere solcher Stege angeordnet werden, so dass auch mehrere Hohlkammern entstehen.

In Figur 9 ist im linken Teil ein Dichtungsprofil 5 ohne Verstärkung dargestellt. Die Wand des Dichtbereiches 7 hat eine Wandstärke e. Im rechten Teil der Figur 9 ist diesem ein verstärktes Dichtungsprofil 5' gegenübergestellt. Die Verstärkung 10 beruht in diesem Falle auf einer Vergrößerung der Wandstärke e' im Bereich des Dichtbereiches.

### Bezugszeichenliste

- 1: Automobiltür
- 2: Dichtungsstrang
- 3: Klebstoffsystem
- 4: Befestigungsfläche
- 5/5': Dichtungsprofil (unverstärkt/verstärkt)
- 6: Befestigungsbereich
- 7/7': Dichtbereich (formstabil/eingefallen)
- 8: Fensterausschnitt
- 9: Hohlkammer
- 9'/9": Teilhohlkammern
- 10: Verstärkung
- 11: Steg
- 12: Stegwurzel
- 13: Stegspitze

- a: Abschnitt des Dichtungsstranges mit unverstärktem Dichtungsprofil
- b: Übergang
- c: Abschnitt des Dichtungsstranges mit verstärktem Dichtungsprofil
- d: Bereich einer starken Krümmung
- e/e': Wandstärke des Hohlkammerprofils im Dichtbereich (unverstärktes/verstärktes Dichtungsprofil)

## Patentansprüche

1. Verfahren zur Herstellung eines Dichtungsstrangs zum Abdichten zwischen einem beweglichen Fahrzeugteil und der Karosserie eines Automobils, dessen Dichtungsprofil (5) als Hohlkammerprofil ausgebildet wird, wobei der Dichtungsstrang (2) in mindestens einem zu starker Krümmung vorgesehenen Bereich ein in die Hohlkammer hinein verstärktes Dichtungsprofil aufweist und die in Längsrichtung des Dichtungsstrangs verlaufende Verstärkung (10) ein Einfallen des Dichtbereichs des Dichtungsprofils (5) verhindert oder begrenzt,
**dadurch gekennzeichnet,**
**dass** die Verstärkung bei laufender Extrusion unter Veränderung des Spaltquerschnitts des das Hohlkammerprofil komplett bildenden Extrusionsspalts einstückig angeformt wird.

2. Verfahren nach Anspruch 1,
**dadurch gekennzeichnet,**
**dass** innerhalb eines Bereichs starker Krümmung (d) Abschnitte mit verstärktem Dichtungsprofil (c) durch mindestens einen Abschnitt mit unverstärktem Dichtungsprofil (a) unterbrochen werden.

3. Verfahren nach Anspruch 1,
**dadurch gekennzeichnet,**
**dass** die Verstärkung (10) als mindestens ein Steg (11) ausgebildet wird.

4. Verfahren nach Anspruch 3,
**dadurch gekennzeichnet,**
**dass** der mindestens eine Steg (11) keilförmig ausgebildet wird und die Mitte des Dichtungsprofils (5') nicht überragt,
wobei die mindestens eine Stegwurzel (12) in der dem Befestigungsbereich (6) gegenüberliegenden Wand des Dichtbereichs (7) liegt,
und wobei die mindestens eine Stegspitze (13) in die Hohlkammer (9) ragt und in Richtung des Befestigungsbereiches (6) zeigt.

5. Verfahren nach Anspruch 3,
**dadurch gekennzeichnet,**
**dass** der mindestens eine Steg (11) keilförmig ausgebildet wird und die Mitte des Dichtungsprofils (5') überragt,
wobei die mindestens eine Stegwurzel (12) in dem Befestigungsbereich (6) liegt,
und wobei die mindestens eine Stegspitze (13) in die Hohlkammer (9) ragt und in Richtung der dem Befestigungsbereich (6) gegenüberliegenden Wand des Dichtbereichs (7) zeigt.

6. Verfahren nach Anspruch 3,
**dadurch gekennzeichnet,**
**dass** der mindestens eine Steg (11) durchgehend zwischen dem Befestigungsbereich (6) und der dem Befestigungsbereich (6) gegenüberliegenden Wand des Dichtbereichs (7) ausgebildet wird und der Steg (11) die Hohlkammer in mindestens zwei Teilhohlkammern (9',9") teilt.

7. Verfahren nach Anspruch 1,
**dadurch gekennzeichnet,**
**dass** die Verstärkung (10) als Vergrößerung der Wandstärke (e') des Dichtbereichs (7) des verstärkten Dichtungsprofils (5') gegenüber der Wandstärke (e) des Dichtbereichs (7) des unverstärkten Dichtungsprofils (5) ausgebildet wird.

8. Dichtungsstrang,
**dadurch gekennzeichnet,**
**dass** er nach dem Verfahren gemäß einem der vorangehenden Patentansprüche 1 bis 7 hergestellt wird.

## Claims

1. Method of producing a sealing strip for sealing between a movable vehicle part and the bodywork of an automobile, the sealing profile (5) of which is formed as a cavity profile, wherein the sealing strip (2) has in at least one region provided for stronger curvature a sealing profile strengthened into the cavity and the strengthening (10), which extends in longitudinal direction of the sealing strip, prevents or limits collapsing of the sealing region of the sealing profile (5), **characterised in that** the strengthening is integrally formed during continuous extrusion with change of the gap cross-section of the extrusion gap forming the cavity profile in finished state.

2. Method according to claim 1, **characterised in that** sections with strengthened sealing profile (c) are interrupted by at least one section with unstrengthened sealing profile (a) within a region of stronger curvature (d).

3. Method according to claim 1, **characterised in that** the strengthening (10) is constructed as a web (11).

4. Method according to claim 3, **characterised in that** the at least one web (11) is of wedge-shaped construction and does not project beyond the centre of the sealing profile (5'), wherein the at least one web root (12) is disposed in the wall of the sealing region (7) opposite the fastening region (6) and wherein the at least one web tip (13) projects into the cavity (9) and points in the direction of the fastening region (6).

5. Method according to claim 3, **characterised in that** the at least one web (11) is of wedge-shaped construction and projects beyond the centre of the sealing profile (5'), wherein the at least one web root (12) is disposed in the fastening region (6) and wherein the at least one web tip (13) protrudes into the cavity (9) and points in the direction of the wall of the sealing region (7) opposite the fastening region (6).

6. Method according to claim 3, **characterised in that** the at least one web (11) is formed to be continuous between the fastening region (6) and the wall of the sealing region (7) opposite the fastening region (6) and the web (11) divides the cavity into at least two part cavities (9', 9").

7. Method according to claim 1, **characterised in that** the strengthening (10) is formed as an enlargement of the wall thickness (e') of the sealing region (7) of the strengthened sealing profile (5') relative to the wall thickness (e) of the sealing region (7) of the unstrengthened sealing profile (5).

8. Sealing strip, **characterised in that** it is produced in accordance with the method according to one of the preceding patent claims 1 to 7.

## Revendications

1. Procédé de fabrication d'un bourrelet d'étanchéité pour établir une étanchéité entre une partie de véhicule mobile et la carrosserie d'une automobile, dont le profil d'étanchéité (5) est réalisé comme profil à chambre creuse, où le bourrelet d'étanchéité (2) présente dans au moins une zone prévue pour une forte courbure un profil d'étanchéité renforcé jusque dans l'intérieur de la chambre creuse, et le renforcement (10) s'étendant dans la direction longitudinale du bourrelet d'étanchéité empêche ou limite un affaissement de la zone d'étanchéité du profil d'étanchéité (5), **caractérisé en ce que**
le renforcement est rapporté par formage en une pièce au cours de l'extrusion en modifiant la section transversale de la fente d'extrusion formant complètement le profil à chambre creuse.

2. Procédé selon la revendication 1, **caractérisé en ce que**, à l'intérieur d'une zone de forte courbure (d), des sections à profil d'étanchéité renforcé (c) sont interrompues par au moins une section d'un profil d'étanchéité non renforcé (a).

3. Procédé selon la revendication 1, **caractérisé en ce que** le renforcement (10) est configuré par au moins une baguette (11) .

4. Procédé selon la revendication 3, **caractérisé en ce qu'**au moins une baguette (11) est réalisée en forme de coin et ne fait pas saillie sur le milieu du profil d'étanchéité (5'), où au moins une racine de baguette (12) se situe dans la paroi de la zone d'étanchéité (7) opposée à la zone de fixation (6), et où au moins une pointe de baguette (13) fait saillie dans la chambre creuse (9) et est orientée en direction de la zone de fixation (6).

5. Procédé selon la revendication 3, **caractérisé en ce qu'**au moins une baguette (11) est réalisée en forme de coin et fait saillie sur le milieu du profil d'étanchéité (5'), où au moins une racine de baguette (12) se situe dans la zone de fixation (6), et où au moins une pointe de baguette (13) fait saillie dans la chambre creuse (9) et est orientée en direction de la paroi de la zone d'étanchéité (7) opposée à la zone de fixation (6).

6. Procédé selon la revendication 3, **caractérisé en ce qu'**au moins une baguette (11) est réalisée d'une manière continue entre la zone de fixation (6) et la paroi de la zone d'étanchéité (7) opposée à la zone de fixation (6) et que la baguette (11) sépare la chambre creuse en au moins deux chambres creuses partielles (9', 9").

7. Procédé selon la revendication 1, **caractérisé en ce que** le renforcement (10) est réalisé comme agrandissement de l'épaisseur de paroi (e') de la zone d'étanchéité (7) du profil d'étanchéité renforcé (5') par rapport à l'épaisseur de paroi (e) de la zone d'étanchéité (7) du profil d'étanchéité non renforcé (5).

8. Bourrelet d'étanchéité, **caractérisé en ce qu'**il est fabriqué conformément au procédé selon l'une des revendications précédentes 1 à 7.
